# EUROPÄISCHE PATENTSCHRIFT

(11) **EP 3 694 440 B1**
(45) Veröffentlichungstag und Bekanntmachung des Hinweises auf die Patenterteilung: **19.01.2022**
(21) Anmeldenummer: 18825865.1
(22) Anmeldetag: 28.11.2018
(51) Int. Cl.: A61C 13/00, A61C 8/00

(54) **ZAHNERSATZFORMBLOCK UND VERFAHREN ZUR HERSTELLUNG EINES ZAHNERSATZTEILS AUS DEM ZAHNERSATZFORMBLOCK**
DENTAL PROSTHESIS MOULDING BLOCK AND METHOD FOR PRODUCING A DENTAL PROSTHESIS PART FROM THE DENTAL PROSTHESIS MOULDING BLOCK
BLOC MOULÉ DE PROTHÈSE DENTAIRE ET PROCÉDÉ DE FABRICATION D'UNE PIÈCE DE PROTHÈSE DENTAIRE À PARTIR DU BLOC MOULÉ DE PROTHÈSE DENTAIRE

(30) Priorität: 28.11.2017 DE 102017221344
(43) Veröffentlichungstag der Anmeldung: 19.08.2020
(60) Teilanmeldung: 21211981.2
(73) Patentinhaber: Sirona Dental Systems GmbH, 64625 Bensheim (DE)
(72) Erfinder: SCHNEIDER, Sascha, 64367 Mühltal (DE); FORNOFF, Peter, 64385 Reichelsheim (DE)
(74) Vertreter: Özer, Alpdeniz
(86) Internationale Anmeldenummer: PCT/EP2018/082837
(87) Internationale Veröffentlichungsnummer: WO 2019/106009

(56) Entgegenhaltungen:
- EP-A1- 0 160 797
- WO-A1-2008/009272
- DE-A1- 19 654 055
- KR-A- 20130 097 820
- US-A1- 2007 264 612
- US-A1- 2012 251 979

## Beschreibung

### Technisches Gebiet

Die vorliegende Erfindung betrifft einen Zahnersatzformblock. Außerdem betrifft sie ein Verfahren zur Herstellung eines Zahnersatzteils aus dem Zahnersatzformblock.

### Stand der Technik

Einteilige Zahnimplantate, bei denen der Abutment-Teil fest mit dem Implantat verbunden ist, werden bisher in Standardformen vorproduziert. Diese Standardimplantate können beispielsweise aus Keramik oder Titan bestehen und linear oder auch abgewinkelt sein. Die Individualisierung der einteiligen Standardimplantate ist allerdings schwierig, da die vorproduzierten Teile dafür unter Berücksichtigung einer späteren Einschraubrotation und Einschraubhöhe extraoral gehalten und bearbeitet werden müssen. Standardimplantate erst nach dem Einsetzen und Einheilen in den Kiefer zu individualisieren ist sehr schwierig, da die einzubringende Energie die Teile erwärmen oder lockern könnte.

Eine Alternative zu den Standardimplantaten besteht deshalb in Implantaten, die aus mehreren Teilen bestehen. Hierbei ist eine Implantatschraube ein separates Standardteil, das in einen individualisierbare Abutment-Aufbau eingeschraubt werden kann. Dieser kann dann problemlos extraoral bearbeitet werden. Allerdings kann es bei einem mehrteiligen Implantat zu Spaltenbildung zwischen den einzelnen Elementen kommen. Durch diese können Bakterien in das Innere des Implantats wandern und von dort durch mechanische Effekte des Kauens stoßweise über die Zeit herauswandern und den Knochen infizieren. Dies führt zu einer Periimplantitis, die sich in Knochenrückgang und einem daraus folgenden Implantatverlust äußert. Außerdem kann es in mehrteiligen Implantaten zu einem mechanischen Verschleiß an der Verbindung der Elemente kommen. Nach mehreren Millionen Kauzyklen lockert sich die Schraube und damit auch der Aufbau oder die Schraube zerbricht sogar.

Zur Herstellung der Aufbauten mehrteiliger Implantate kommen zunehmend automatisierte CAD/CAM-Verfahren zum Einsatz, in denen aus einem Zahnersatzformblock das jeweilige Zahnersatzteil herausgearbeitet wird. Dies ermöglicht es den Herstellern eine hohe gleichbleibende Qualität und Passgenauigkeit des Zahnersatzes bei gleichzeitig günstigen Preisen anzubieten.

Aus der US 2012/0251979 ist ein Zahnersatzformblock mit einem durch den Block von einer Seitenfläche zur gegenüberliegenden Seitenfläche hindurchgehenden Kanal für eine Schraube bekannt, in dessen einer Seitenfläche ein Anschlussteil eines Abutments befestigt ist. Das Anschlussteil kann aus Metall, Keramik oder aus einem Polymer sein.

Aus der DE 196 54 055 A1 ist ein Formkörper zur Herstellung von Zahnersatzteilen bekannt, der aus einem Basiskörper und einer diesen umgebenden Schicht besteht. Zum Einspannen des Formkörpers in eine Fräsmaschine weist eine Fläche eine Bohrung auf, in die ein Haltezapfen eingebracht werden kann.

Aus der WO 2008/009272 A1 ist bekannt, einen Grünling zu einem Formkörper zu bearbeiten, der einen Verankerungsabschnitt mit einem Gewinde sowie einen Aufbauabschnitt zum Anbringen von Prothetikelementen aufweist.

Es ist eine Aufgabe der vorliegenden Erfindung, einen Zahnersatzformblock bereitzustellen, aus dem mittels eines CAD/CAM-Verfahrens ein Zahnersatzteil gefertigt werden kann, welches nicht die oben angeführten Nachteile mehrteiliger Implantate aufweist. Eine weitere Aufgabe der Erfindung besteht darin, ein Verfahren zur Herstellung eines derartigen Zahnersatzteils bereitzustellen.

### Darstellung der Erfindung

Diese Aufgabe wird durch einen Zahnersatzformblock zur Herstellung eines Zahnersatzteils, insbesondere eines Implantats, gelöst, welcher ein inneres Material aufweist, das zumindest teilweise von einem äußeren Material umgeben ist. Die Härte des inneren Materials unterscheidet sich von der Härte des äußeren Materials. Unter der Härte wird dabei insbesondere die Vikers-Härte gemäß der Norm DIN EN ISO 6507-1:2005 bis -4:2005 verstanden. Auf diese Weise kann das innere Material als Ausgangsmaterial zur Herstellung eines Stifts mit einem selbstschneidenden Außengewinde verwendet werden und das äußere Material kann als Ausgangsmaterial für einen Aufbau dienen.

Das innere Material bildet einen Teil einer ersten Oberfläche des Zahnersatzformblocks. Durch Materialabtragung kann also aus der ersten Oberfläche der Stift herausgearbeitet werden. Es ist also möglich, extraoral mittels eines CAD/CAM-Verfahrens ein einteiliges Zahnersatzteil in Form eines Implantats zu fertigen. Dieses vereint den Vorteil der einteiligen Ausführung von Standardimplantaten, dass keine Lockerung von Einzelkomponenten stattfinden kann und dass sich in dem Implantat keine Spalten bilden können, welche von Bakterien besiedelt werden, mit dem Vorteil mehrteiliger Implantate, dass eine extraorale Fertigung des Aufbaus möglich ist. Diese Fertigung muss nicht in einem zahnmedizinischen Labor erfolgen, sondern kann auch in einer Zahnarztpraxis durchgeführt werden.

Das innere Material kann an der ersten Oberfläche vollständig von dem äußeren Material umgeben sein. Alle anderen Oberflächen des Zahnersatzformblocks können aus dem äußeren Material bestehen. Auf diese Weise ragt der Stift nach der Materialabtragung aus der ersten Oberfläche heraus und ist ansonsten vollständig von dem äußeren Material umgeben.

In einer bevorzugten Ausführungsform weist das innere Material eine geringere Härte als das äußere Material auf. Besonders bevorzugt ist das innere Material ein Metall, wie insbesondere Titan (Vikers-Härte ca. 200 HV 10). Das äußere Material ist in dieser Ausführungsform besonders bevorzugt eine Keramik, wie insbesondere Zirkoniumdioxid (ZrO₂, Vikers-Härte ca. 1250 HV 10) oder eine Lithiumdisilikat- (Vikers-Härte ca. 650 HV 10) oder Glaskeramik. Dies ermöglicht auf der einen Seite eine sichere Verankerung des Zahnersatzteils im Kiefer mittels des aus dem inneren Material gebildeten Metallstifts und auf der anderen Seite eine ästhetisch ansprechende Gestaltung des Aufbaus aus der Keramik. Dabei erhält der Aufbau dadurch eine besondere Stabilität, dass das Metall als inneres Material auch im fertigen Implantat zumindest teilweise von einem äußeren Material umgeben ist. Zudem ist der Stift einstückig mit dem inneren Material gebildet, welches in der Keramik verbleibt. In einer anderen besonders bevorzugten Ausführungsform handelt es sich bei dem inneren Material und dem äußeren Material um Metalle. Hierbei ist das Metall des äußeren Materials härter als das Metall des inneren Materials. Als inneres Material ist Titan (Vikers-Härte ca. 200 HV 10) wegen guter Biokompatibilität und Einheileigenschaften vorteilhaft, als äußeres Material ist eine Cobalt-Chrom-Legierung (CoCr, Vikers-Härte ca. 300 HV 10) wegen der Wirtschaftlichkeit vorteilhaft.

In noch einer anderen Ausführungsform weist das innere Material eine größere Härte als das äußere Material auf. Als inneres Material ist Zirkoniumdioxid (ZrO₂, Vikers-Härte ca. 1250 HV 10) wegen der Biokompatibilität und Ästhetik vorteilhaft, als äußeres Material ist eine Cobalt-Chrom-Legierung (CoCr, Vikers-Härte ca. 300 HV 10) wegen der Wirtschaftlichkeit oder eine Lithiumdisilikat- (Vikers-Härte ca. 650 HV 10) oder Glaskeramik wegen der Ästhetik und Verarbeitbarkeit vorteilhaft.

Der Zahnersatzblock weist ein Innengewinde auf, welches von einer zweiten Oberfläche in das innere Material hineinreicht. Die zweite Oberfläche liegt der ersten Oberfläche gegenüber. Hierdurch können nach Fertigung des einteiligen Implantats weitere Elemente auf dieses aufgeschraubt werden.

Die Aufgabe wird weiterhin durch das Verfahren zur Herstellung eines Zahnersatzteils gelöst. In diesem wird zunächst ein erfindungsgemäßer Zahnersatzformblock bereitgestellt. Das Zahnersatzteil wird durch Materialabtragung aus dem erfindungsgemäßen Zahnersatzformblock hergestellt. Diese Herstellung erfolgt mittels eines CAD/CAM-Verfahrens. Dabei wird aus einem Teil des inneren Materials ein Stift mit einem selbstschneidenden Außengewinde gebildet.

Das Verfahren ermöglicht es also, bekannte CAD/CAM-Techniken einzusetzen, um aus dem Zahnersatzformblock ein einteiliges Zahnersatzteil, insbesondere ein Implantat, herzustellen.

Da der Zahnersatzformblock ein Innengewinde aufweist, welches von der zweiten Oberfläche in das in das innere Material hineinreicht, wird das Zahnersatzteil so hergestellt, dass ein Zahnersatzversorgungelement in das Innengewinde des Zahnersatzteils eingeschraubt werden kann. Bei dem Zahnersatzversorgungelement kann es sich beispielsweise um ein Abutment handeln. In dieser Ausführungsform bildet das einstückige Zahnersatzteil einen Sockel für das Abutment.

Anders als bei der Bearbeitung von einteiligen Standardimplantaten, welche mittels ihres Stifts eingespannt werden müssen, kann der Zahnersatzformblock in einem CAD/CAM-Verfahren über eine seiner Oberflächen fixiert werden. Der Stift wird dann vorzugsweise zuerst in einem ersten Bereich des Zahnersatzformblocks durch vollständiges Abtragen des äußeren Materials und teilweises Abtragen des inneren Materials gebildet. Dann wird in einem zweiten Bereich des Zahnersatzformblocks das äußere Material teilweise abgetragen, so dass das innere Material im zweiten Bereich an keiner Oberfläche des Zahnersatzformblocks freigelegt wird.

Die Herstellung des Zahnersatzteils erfolgt vorzugsweise in Abhängigkeit von mit einer Intraoralkamera gewonnenen Daten eines Patienten, so dass es individuell an die Bedürfnisse des Patienten angepasst werden kann.

Kurze Beschreibung der Zeichnungen Ausführungsbeispiele der Erfindungen sind in Zeichnungen dargestellt und werden in der nachfolgenden Beschreibung näher erläutert.
Fig. 1 zeigt eine isometrische Darstellung eines Zahnersatzformblocks.
Fig. 2 zeigt eine Querschnittansicht des Zahnersatzformblocks gemäß Fig. 1.
Fig. 3 zeigt eine isometrische Darstellung eines Zahnersatzformblocks gemäß einem Ausführungsbeispiel der Erfindung.
Fig. 4 zeigt eine Querschnittansicht des Zahnersatzformblocks gemäß Fig. 3, gedreht um 180° in der Zeichenebene.
Fig. 5 zeigt einen ersten Bearbeitungsschritt eines Zahnersatzformblocks.
Fig. 6 zeigt einen zweiten Bearbeitungsschritt eines Zahnersatzformblocks.
Fig. 7 zeigt einen dritten Bearbeitungsschritt eines Zahnersatzformblocks.
Fig. 8 zeigt eine Querschnittdarstellung eines Zahnersatzteils, welches mittels eines Ausführungsbeispiels des erfindungsgemäßen Verfahrens herstellbar ist.

### Ausführungsbeispiele

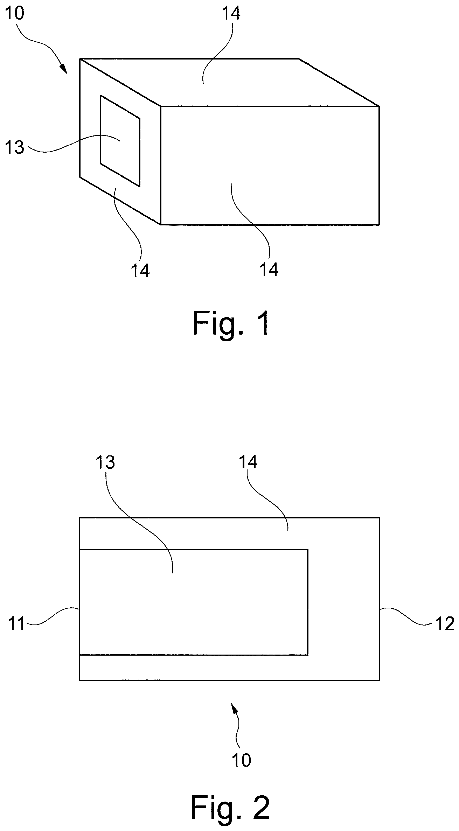

Ein quaderförmiger Zahnersatzformblock 10 mit einer ersten Oberfläche 11 und einer dieser gegenüberliegenden zweiten Oberfläche 12 ist in den Fig. 1 und 2 dargestellt. Ein Kern des Zahnersatzformblocks 10 besteht aus Titan als einem inneren Material 13. Auf dieses ist Zirkoniumdioxid als äußeres Material 14 aufgepresst. Dadurch besteht die erste Oberfläche 11 teilweise aus Titan und teilweise aus Zirkoniumdioxid, während alle anderen Oberflächen des Zahnersatzformblocks 10 ausschließlich aus Zirkoniumdioxid bestehen. Das innere Material 13 liegt an der Oberfläche 11 frei und ist dort rahmenförmig vom äußeren Material 14 umgeben. Alle anderen Oberflächen des Zahnersatzformblocks 10 werden von dem äußeren Material gebildet.

Der Kern des Zahnersatzformblocks 10 kann aus Titan als einem inneren Material 13 bestehen und bkann ei dem äußeren Material 14 handelt es sich um eine Cobalt-Chrom-Legierung oder um eine Glaskeramik handeln.

Es ist auch möglich, dass der Kern des Zahnersatzformblocks 10 aus Zirkoniumdioxid als einem inneren Material 13 besteht. Bei dem äußeren Material 14 kann es sich beispielsweise um Titan, um eine Cobalt-Chrom-Legierung oder um eine Glaskeramik handeln.

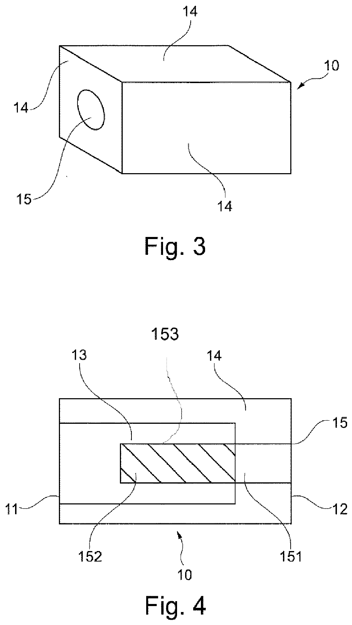

In einem erfindungsgemäßen Ausführungsbeispiel des Zahnersatzformblocks 10, das in den Fig. 3 und 4 dargestellt ist, besteht dieser aus denselben Materialien wie vorstehend beschrieben. Ausgehend von der zweiten Oberfläche 12 verläuft eine Öffnung 15 durch das äußere Material 14 in das innere Material 13 hinein. Während der Bereich 151 im äußeren Material 14 glatte Innenwände aufweist, ist der Bereich 152 im inneren Material 13 mit einem Innengewinde 153 versehen.

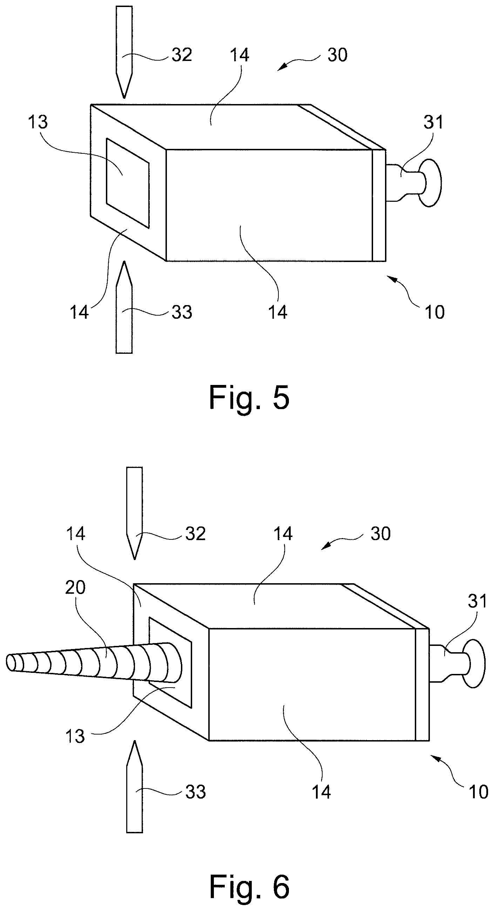

In einem ersten Ausführungsbeispiel des erfindungsgemäßen Verfahrens wird in einem dentalen CAD/CAM-System 30 eine gewünschte Form eines Zahnersatzteils in Abhängigkeit von Daten eines Patienten festgelegt. Diese Daten können beispielsweise mittels einer Intraoralkamera gewonnen werden. Dann wird ein Zahnersatzformblock 10 gemäß dem voranstehend beschriebenen erfindungsgemäßen Ausführungsbeispiel in das CAD/CAM-System 30 eingesetzt und dort an seiner zweiten Oberfläche 12 mittels eines Blockhalters 31 fixiert. Dies ist in Fig. 5 gezeigt. Materialabtragungswerkzeuge 32, 33 werden oberhalb und unterhalb des Zahnersatzformblocks 10 positioniert.

Mittels der Materialabtragungswerkzeuge 32, 33 erfolgt beginnend an der ersten Oberfläche 11, eine Materialabtragung aus dem Zahnersatzformblock 10, um so zunächst einen Stift 20 mit einem selbstscheidenden Außengewinde zu bilden. Dies ist in Fig. 6 dargestellt. Hierzu wird in einem ersten Bereich des Zahnersatzformblocks 10 das äußere Material 14 vollständig abgetragen. Das innere Material 13 wird in diesem Bereich teilweise abgetragen, um aus ihm den Stift 20 zu bilden.

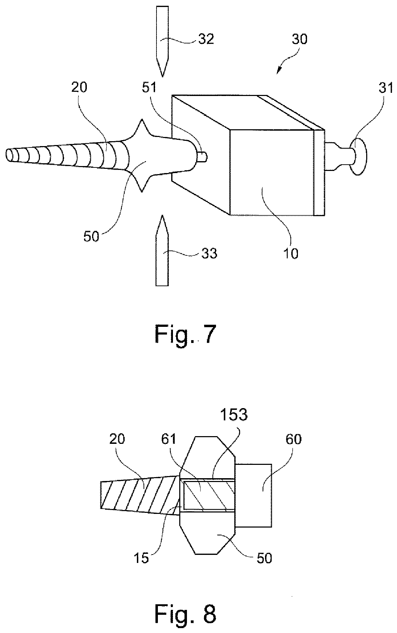

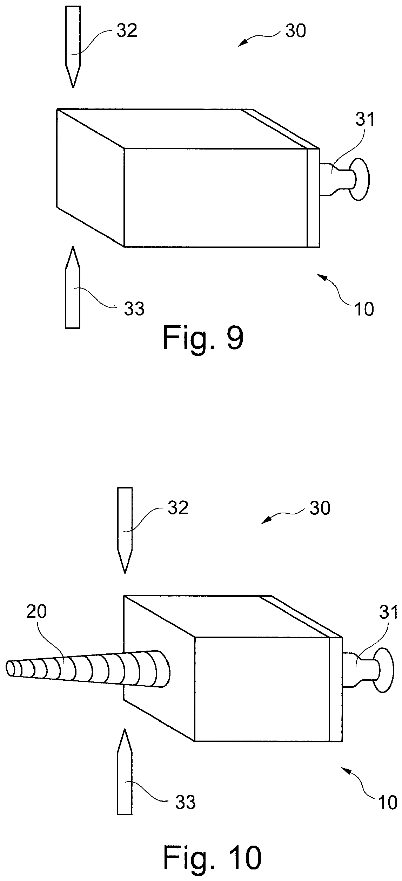

Wie in Fig. 7 dargestellt ist, wird anschließend ein Zahnersatzteil 50 gebildet, das am Ende der Materialabtragung nur noch über einen Abstich 51 mit dem Zahnersatzformblock 10 verbunden ist. Hierzu wird in einem zweiten Bereich des Zahnersatzformblocks 10 das äußere Material 14 teilweise abgetragen, ohne dass dabei das innere Material 13 in diesem zweiten Bereich freigelegt wird. Nach Entfernen des Abstichs 51 kann das fertige Zahnersatzteil 50, welches einstückig mit dem Stift 20 ausgebildet ist, aus dem CAD/CAM-System 30 entnommen werden.

Da das Zahnersatzteil 50 aus einem erfindungsgemäßen Zahnersatzformblock 10 (Fig. 4) hergestellt ist, weist es noch immer das Innengewinde 153 zwischen dem Stift 20 und einer im Zuge der Materialabtragung erzeugten Oberfläche, welche dem Stift 20 gegenüberliegt, auf. Der Bereich 151 der Öffnung 15, welcher kein Innengewinde aufweist, wurde dabei vollständig abgetragen. Ein Zahnersatzversorgungselement 60 in Form eines Abutments kann mittels einer Schraube 61 in das Innengewinde 153 eingeschraubt werden, wie in Fig. 8 dargestellt ist.

Die voranstehend beschriebenen Beispiele des Zahnersatzformblocks und des Verfahrens ermöglichen die einteilige individualisierte Herstellung von Zahnersatzteilen in Form von Implantaten.

## Patentansprüche

1. Zahnersatzformblock (10) zur Herstellung eines Zahnersatzteils (50), aufweisend ein inneres Material (13), das zumindest teilweise von einem äußeren Material (14) umgeben ist, dessen Härte sich von der Härte des inneren Materials (13) unterscheidet, wobei das innere Material (13) einen Teil einer ersten Oberfläche (11) des Zahnersatzformblocks (10) bildet, **dadurch gekennzeichnet, dass** der Zahnersatzformblock (10) ein Innengewinde (153) aufweist, welches von einer zweiten Oberfläche (12), die der ersten Oberfläche (11) gegenüberliegt, in das innere Material (13) hineinreicht.

2. Zahnersatzformblock (10) nach Anspruch 1, **dadurch gekennzeichnet, dass** das innere Material (13) eine geringere Härte als das äußere Material (14) aufweist.

3. Zahnersatzformblock (10) nach Anspruch 2, **dadurch gekennzeichnet, dass** das innere Material (13) ein Metall ist und das äußere Material (14) eine Keramik ist.

4. Zahnersatzformblock (10) nach Anspruch 2, **dadurch gekennzeichnet, dass** das innere Material (13) und das äußere Material (14) Metalle sind.

5. Zahnersatzformblock (10) nach Anspruch 1, **dadurch gekennzeichnet, dass** das innere Material (13) eine größere Härte als das äußere Material (14) aufweist.

6. Zahnersatzformblock (10) nach Anspruch 5, **dadurch gekennzeichnet, dass** das innere Material (13) eine Keramik ist.

7. Zahnersatzformblock (10) nach einem der Ansprüche 1 bis 6, **dadurch gekennzeichnet, dass** eine das Innengewinde (153) aufweisende Öffnung (15) ausgehend von der zweiten Oberfläche (12) durch das äußere Material (14) in das innere Material (13) hinein verläuft.

8. Zahnersatzformblock (10) nach Anspruch 7, **dadurch gekennzeichnet, dass** die Öffnung (15) einen Bereich (151) im äußeren Material (14) mit glatten Innenwänden aufweist und dass ein Bereich (152) der Öffnung (15) im inneren Material (13) mit dem Innengewinde (153) versehen ist.

9. Verfahren zur Herstellung eines Zahnersatzteils (50), umfassend:
- Bereitstellen eines Zahnersatzformblocks (10), und
- Herstellung des Zahnersatzteils (50) durch Materialabtragung aus dem Zahnersatzformblock (10) mittels eines CAD/CAM-Verfahrens, wobei ein Stift (20) mit einem selbstschneidenden Außengewinde gebildet wird,
**dadurch gekennzeichnet, dass** ein Zahnersatzformblock (10) nach einem der Ansprüche 1 bis 8 bereitgestellt wird und dass der Stift (20)aus einem Teil des inneren Materials (13) gebildet wird.

10. Verfahren nach Anspruch 9, **dadurch gekennzeichnet, dass** zuerst in einem ersten Bereich des Zahnersatzformblocks (10) der Stift (20) durch vollständiges Abtragen des äußeren Materials (14) und teilweises Abtragen des inneren Materials (13) gebildet wird und dann in einem zweiten Bereich des Zahnersatzformblocks (10) das äußere Material (14) teilweise abgetragen wird, so dass das innere Material (13) im zweiten Bereich an keiner Oberfläche des Zahnersatzformblocks (10) freigelegt wird.

11. Verfahren nach Anspruch 9 oder 10, **dadurch gekennzeichnet, dass** das Zahnersatzteil (50) so hergestellt wird, dass ein Zahnersatzversorgungselement (60) in das Innengewinde (153) des Zahnersatzteils (50) eingeschraubt werden kann.

12. Verfahren nach einem der Ansprüche 9 bis 11, **dadurch gekennzeichnet, dass** die Herstellung des Zahnersatzteils (50) in Abhängigkeit von mit einer Intraoralkamera gewonnenen Daten eines Patienten erfolgt.

## Claims

1. A dental prosthesis moulding block (10) for producing a dental prosthesis part (50), comprising an inner material (13) that is at least partially surrounded by an outer material (14), the hardness of which differs from the hardness of the inner material (13), wherein the inner material (13) forms part of a first surface (11) of the dental prosthesis moulding block (10), **characterised in that** the dental prosthesis moulding block (10) has an internal thread (153) that extends into the inner material (13) from a second surface (12) opposite to the first surface (11).

2. The dental prosthesis moulding block (10) according to claim 1, **characterised in that** the inner material (13) has a lesser hardness than the outer material (14).

3. The dental prosthesis moulding block (10) according to claim 2, **characterised in that** the inner material (13) is a metal and the outer material (14) is a ceramic.

4. The dental prosthesis moulding block (10) according to claim 2, **characterised in that** the inner material (13) and the outer material (14) are metals.

5. The dental prosthesis moulding block (10) according to claim 1, **characterised in that** the inner material (13) has a greater hardness than the outer material (14).

6. The dental prosthesis moulding block (10) according to claim 5, **characterised in that** the inner material (13) is a ceramic.

7. The dental prosthesis moulding block (10) according to one of claims 1 to 6, **characterised in that** an opening (15) having the internal thread (153) extends from the second surface (12) though the outer material (14) into the inner material (13).

8. The dental prosthesis moulding block (10) according to claim 7, **characterised in that** the opening (15) has a region (151) in the outer material (14) with smooth inner walls and **in that** a region (152) of the opening (15) in the inner material (13) is provided with the internal thread (153).

9. A method of producing a dental prosthesis part (50) comprising:
- providing a dental prosthesis moulding block (10), and
- producing the dental prosthesis part (50) by removing material from the dental prosthesis moulding block (10) by means of a CAD/CAM method, wherein a pin (20) having a self-tapping external thread is formed,
**characterised in that** a dental prosthesis moulding block (10) according to one of claims 1 to 8 is provided and **in that** the pin (20) is formed from a part of the inner material (13).

10. The method according to claim 9, **characterised in that** the pin (20) is formed first in a first region of the dental prosthesis moulding block (10) by completely removing the outer material (14) and partially removing the inner material (13) and then, in a second region of the dental prosthesis moulding block (10), the outer material (14) is partially removed so that the inner material (13) is not exposed in the second region on any surface of the dental prosthesis moulding block (10).

11. The method according to claim 9 or 10, **characterised in that** the dental prosthesis part (50) is produced in such a way that a dental prosthesis supply element (60) can be screwed into the internal thread (153) of the dental prosthesis part (50).

12. The method according to one of claims 9 to 11, **characterised in that** the dental prosthesis part (50) is produced as a function of patient data obtained with an intraoral camera.

## Revendications

1. Bloc moulé de prothèse dentaire (10) pour la fabrication d'une pièce de prothèse dentaire (50), comprenant un matériau interne (13) qui est au moins partiellement entouré par un matériau externe (14) dont la dureté diffère de la dureté du matériau interne (13), le matériau interne (13) formant une partie d'une première surface (11) du bloc moulé de prothèse dentaire (10), **caractérisé en ce que** le bloc moulé de prothèse dentaire (10) présente un filetage intérieur (153) qui s'étend depuis une seconde surface (12), qui est opposée à la première surface (11), dans le matériau intérieur (13).

2. Bloc moulé de prothèse dentaire (10) selon la revendication 1, **caractérisé en ce que** le matériau intérieur (13) a une dureté inférieure à celle du matériau extérieur (14).

3. Bloc moulé de prothèse dentaire (10) selon la revendication 2, **caractérisé en ce que** le matériau intérieur (13) est un métal et le matériau extérieur (14) est une céramique.

4. Bloc moulé de prothèse dentaire (10) selon la revendication 2, **caractérisé en ce que** le matériau intérieur (13) et le matériau extérieur (14) sont des métaux.

5. Bloc moulé de prothèse dentaire (10) selon la revendication 1, **caractérisé en ce que** le matériau intérieur (13) a une dureté supérieure à celle du matériau extérieur (14).

6. Bloc moulé de prothèse dentaire (10) selon la revendication 5, **caractérisé en ce que** le matériau intérieur (13) est une céramique.

7. Bloc moulé de prothèse dentaire (10) selon l'une des revendications 1 à 6, **caractérisé en ce qu'**une ouverture (15) comportant le filetage intérieur (153) partant de la seconde surface (12) s'étend à travers le matériau extérieur (14) dans le matériau intérieur (13).

8. Bloc moulé de prothèse dentaire (10) selon la revendication 7, **caractérisé en ce que** l'ouverture (15) comporte une zone (151) dans le matériau extérieur (14) avec des parois intérieures lisses et **en ce qu'**une zone (152) de l'ouverture (15) dans le matériau intérieur (13) est pourvue du filetage intérieur (153).

9. Procédé de fabrication d'une pièce de prothèse dentaire (50) comprenant :
- la fourniture d'un bloc moulé de prothèse dentaire (10), et
- la fabrication de la pièce de prothèse dentaire (50) par enlèvement de matière du bloc moulé de prothèse dentaire (10) au moyen d'un procédé CAO/FAO, une tige (20) étant formée avec un filetage extérieur autotaraudant,
**caractérisé en ce qu'**un bloc moulé de prothèse dentaire (10) selon l'une des revendications 1 à 8 est fourni et **en ce que** la tige (20) est formée à partir d'une partie du matériau intérieur (13).

10. Procédé selon la revendication 9, **caractérisé en ce que** la tige (20) est formée d'abord dans une première zone du bloc moulé de prothèse dentaire (10) par enlèvement complet du matériau extérieur (14) et par enlèvement partiel du matériau intérieur (13) et ensuite dans une seconde zone du bloc moulé de prothèse dentaire (10), le matériau extérieur (14) est partiellement enlevé de manière à n'exposer le matériau intérieur (13) dans la seconde zone à aucune surface du bloc moulé de prothèse dentaire (10).

11. Procédé selon la revendication 9 ou 10, **caractérisé en ce que** la pièce de prothèse dentaire (50) est fabriquée de manière à ce qu'un élément de prothèse dentaire (60) puisse être vissé dans le filetage intérieur (153) de la pièce de prothèse dentaire (50).

12. Procédé selon l'une des revendications 9 à 11, **caractérisé en ce que** la fabrication de la pièce de de prothèse dentaire (50) s'effectue en fonction de données patient obtenues avec une caméra intra-orale.
